# EUROPEAN PATENT SPECIFICATION

(11) **EP 1 476 025 B1**
(45) Date of publication and mention of the grant of the patent: **24.11.2010**
(21) Application number: 02704425.4
(22) Date of filing: 13.02.2002
(51) Int. Cl.: A23G 9/28, A23G 9/24, A23G 9/32

(54) **product with frozen dessert and sweet, crunchy and brittle topping**
Produkt mit gefrorener Süßspeise und süßem, knusprigem und sprödem Überzug
produit avec dessert glacé et nappage sucré, croustillant et friable

(43) Date of publication of application: 17.11.2004
(60) Divisional application: 10181579.3
(73) Proprietor: GENERAL MILLS MARKETING, INC., Minneapolis, MN 55440 (US)
(72) Inventor: HUANG, Victor, Tsangmin, Maple Grove, MN 5531 (US); PANDA, Fern, Alane, White Bear Lake, MN 55110 (US); CHIDA, Kamel, 1009 Pully / Swizerland (CH)
(74) Representative: Vossius & Partner
(86) International application number: PCT/US2002/004442
(87) International publication number: WO 2003/068001

(56) References cited:
- EP-A- 0 686 354
- EP-A- 0 787 435
- EP-A- 0 882 408
- CH-A- 690 606
- US-A- 2 600 566
- US-A- 4 188 768
- US-A- 4 353 927
- US-A- 4 820 533
- US-A- 5 135 767
- US-A- 5 518 744
- US-A- 5 647 905
- US-A- 5 798 131
- US-A1- 2001 043 970
- US-B1- 6 203 831

## Description

The invention relates to a frozen dessert product having a sweet, thin, crunchy, and brittle topping.

Crème brulee is a popular dessert served in many fine restaurants throughout the world. Traditional crème brulee is a rich dessert that is prepared by forming a crispy, caramelized topping over velvety custard. The caramelized topping is the distinguishing feature of crème brulee. The caramelized topping is brittle, crunchy, and sweet. Such a topping could be used on other types of desserts such as any frozen dessert.

Such a caramelized topping placed over a frozen dessert product could provide dual texture to a frozen dessert during consumption. Consumers could break the brittle layer and mix the broken pieces with the frozen dessert prior to consumption. However, such a product prepared by placing a caramelized topping on a frozen dessert would have a relatively short shelf life and would need to be consumed shortly after preparation. Moisture from the frozen dessert would dissolve the caramelized topping. Because of the short shelf life, national distribution of such a product would be difficult.

The invention provides a frozen dessert product having a moisture barrier and a sweet, thin, crunchy, and brittle topping. In particular, the invention provides a frozen dessert product having a sweet, glassy matrix topping that is separated from the frozen dessert by a moisture barrier. The glassy matrix topping remains crunchy and brittle upon storage of the frozen dessert product in a freezer for extended periods of time. The present application further describes a method for making the frozen dessert product. The application also describes a moisture barrier composition and a sweet, glassy matrix topping for frozen dessert products.

One aspect of the invention provides a composition for a frozen dessert product according to claim 1. Preferably this composition comprises a frozen dessert, a moisture barrier covering at least one surface of the frozen dessert, and a sweet, glassy matrix topping placed over the moisture barrier and separated from the frozen dessert by the moisture barrier. The frozen dessert can include, for example, frozen custard, ice cream, ice milk, gelato, milk shakes, frozen yogurt, pudding, sherbet, and sorbet.

The moisture barrier covers at least one surface of the frozen dessert and is positioned between the frozen dessert and the glassy matrix topping to separate the frozen dessert from the glassy matrix topping. The moisture barrier comprises at least 70 weight percent fat based on the weight of the moisture barrier. At least 60 weight percent of the fat in the moisture barrier is liquid at (4°C) 40°F.

The sweet, glassy matrix topping is about 1 to about 3 mm thick and comprises a glassy matrix. The glassy matrix contains a glassy phase comprising sucrose, a polysaccharide having a an average degree of polymerization of about 2 to about 4, or mixture thereof. The glassy matrix contains crystalline sucrose embedded in the glassy phase. The sweet, glassy matrix topping can further comprise a glassy matrix coating covering at least one surface of the glassy matrix.

The present application also describes a method of preparing a frozen dessert product having a thin, sweet, crunchy, and brittle topping. The method comprises (a) covering at least one surface of a frozen dessert with a moisture barrier; and (b) placing a thin, sweet, glassy matrix topping over the moisture barrier. In one embodiment, the frozen dessert is placed in a container such that the frozen dessert conforms to the shape of the container and only the top surface of the frozen dessert is not in contact with the bottom or sidewalls of the container. The exposed top surface of the frozen dessert is covered with a moisture barrier. The sweet, glassy ! matrix topping is then placed over the moisture barrier.

In one embodiment, the glassy matrix contains about 40 to about 80 weight percent glassy phase and about 20 to about 60 weight percent crystalline sucrose embedded into the glassy phase. In another embodiment, the glassy matrix topping comprises a glassy matrix and a glassy matrix coating covering at least one surface of the glassy matrix. The glassy matrix coating can be either transparent or opaque.
**Figure 1a** is a schematic showing a cross-sectional view of a frozen dessert product in a container. The frozen dessert product comprises a frozen dessert, a moisture barrier, and a glassy matrix topping. **Figure 1b** is a schematic showing the corresponding top view of the frozen dessert product.
**Figure 2** is a cross-sectional view of a glassy matrix topping having a glassy matrix covered with a glassy matrix coating.

The invention relates to a frozen dessert product having a moisture barrier and a sweet, thin, crunchy, and brittle topping. In particular, the invention relates to a frozen dessert product having a sweet, glassy matrix topping that is separated from the frozen dessert by a moisture barrier. The topping remains crunchy and brittle upon long-term storage in a freezer. As used herein, the term "long-term storage" refers to storage for at least five months. The frozen dessert product can be distributed on a national or international scale because of the good storage stability. The present application also describes a method for making the frozen dessert product. Furthermore, the present application describes a moisture barrier composition for frozen dessert products that does not crack upon long-term storage in a freezer when the moisture barrier is applied as a coating to a frozen dessert.

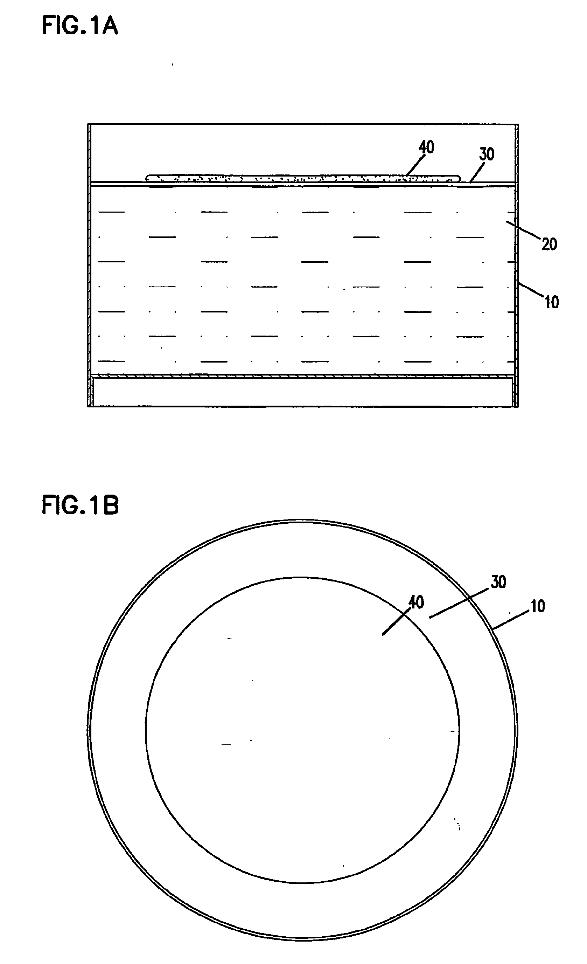

One aspect of the invention provides a frozen dessert product comprising a frozen dessert, a moisture barrier covering at least one surface of the frozen dessert, and a thin, sweet, glassy matrix topping placed over the moisture barrier. In one embodiment of the invention as shown schematically in **Figure 1a**, the composition is in a disposable container **10** such as a paper or plastic cup having a bottom and sidewalls. The frozen dessert **20** is placed inside the disposable container **10** and conforms to the shape of the container. Only the top surface of the frozen dessert is not in contact with the bottom or sidewalls of the container. A moisture barrier **30** is placed on the top surface of the frozen dessert and extends to the inner surfaces of the container sidewalls. A thin layer of the glassy matrix topping **40** is placed over the moisture barrier. **Figure 1a** shows a cross-sectional side view of the composition in a container and **Figure 1b** shows the corresponding top view. The dimensions of the various components are not drawn to scale.

In other embodiments, the frozen dessert product is not placed in a container. The moisture barrier typically covers more than one surface. In some embodiments, the frozen dessert is encapsulated in the moisture barrier. For example, cubes, rectangles, cylinders, or disks of the frozen dessert are covered with a moisture barrier. The glassy matrix topping is placed on at least one surface of the cube, rectangle, cylinder, or disk. The glassy matrix topping can be placed on more than one surface of the frozen dessert. In one embodiment, a glassy matrix topping is placed both under and over the encapsulated frozen dessert.

The frozen dessert can be in the shape of a cake. The moisture barrier can be placed on the top and side surfaces of the cake. The glassy matrix topping is placed on the top surface of the cake over the moisture barrier.

The frozen dessert can also be placed in a cone. The frozen dessert can be placed entirely within the cone or can extend beyond the cone. The top surface of the frozen dessert is typically flat. The moisture barrier covers at least the top surface of the frozen dessert and the glassy matrix topping is placed over the moisture barrier.

The frozen dessert can include, for example, frozen custard, ice cream, ice milk, gelato, milk shakes, frozen yogurt, pudding, sherbet, and sorbet. If the frozen dessert is placed in a disposable container, a temperature is chosen for placement such that the frozen dessert flows in the container and conforms to the shape of the container. The temperature can be lowered after the frozen dessert has been placed in the container.

The moisture barrier covers at least one surface of the frozen dessert and is positioned between the frozen dessert and the sweet, glassy matrix topping. Preferably, the moisture barrier covers all surfaces of the frozen dessert that are not in contact with a container in which the frozen dessert is placed. In one embodiment of the invention, the moisture barrier covers only a top surface of the frozen dessert and all other surfaces of the frozen dessert are in contact with the bottom or sidewalls of the container.

The moisture barrier is typically applied as a thin layer having a thickness of about 1 mm to about 3 mm. If the moisture barrier is too thin, coverage of the frozen dessert by the moisture barrier can be incomplete. This can cause the sweet, glassy matrix topping to loose crispiness or dissolve under long-term storage conditions. If the layer is too thick, the presence of the moisture barrier is more apparent to a consumer. Additionally, when the frozen dessert is within a container, a thicker moisture barrier has an increased tendency to pull away from the sidewalls of the container leaving a portion of the frozen dessert incompletely covered with the moisture barrier. In some embodiments, the moisture barrier has the appearance and consistency of the frozen dessert when hardened.

To remain an effective moisture barrier during long-term storage at -23 °C (-10 °F), the typical temperature used to store frozen dessert products, the moisture barrier preferably remains free of cracks over time. To minimize cracking, a high percentage of fat that is liquid at 4 °C (40 °F) is included in the moisture barrier. The moisture barrier contains at least 70 weight percent at and at least 60 weight percent of the fat in the moisture barrier is liquid at 4 °C (40 °F). The moisture content of the moisture barrier is typically less than about 1 weight percent based on the weight of the moisture barrier.

Suitable fats that remain liquid at 4 °C (40 °F) include, for example, various food oils, medium chain length triglycerides, and mixtures thereof. As used herein, a "medium chain length triglyceride" refers to a medium chain length triglyceride having a chain length of six to ten carbon atoms. Suitable food oils include soybean oil, cottonseed oil, peanut oil, sunflower oil, safflower oil, corn oil, canola oil, and the like.

Other fats such as, for example, coconut oil, cocoa butter, butter, palm oil, palm kernel oil, hydrogenated oils, and mixtures thereof can be used in amounts up to about 40 weight percent of the fat in the moisture barrier. These fats typically are not a liquid at 4 °C (40°C).

In one embodiment, about 82 to about 86 weight percent of the fat in the moisture barrier is a food oil, a medium chain length triglyceride, or mixture thereof that is a liquid when stored at 4 °C (40 °F). Additionally, about 14 to about 18 weight percent of the fat in the moisture barrier is from coconut oil, cocoa butter, butter, palm oil, palm kernel, hydrogenated oil, or mixture thereof.

Although the moisture barrier can be 100 percent fat, other ingredients are generally added to improve the appearance and organoleptic characteristics. The moisture barrier can contain edible protein from either an animal or vegetable source. In one embodiment, the protein is from dry milk based ingredients. The dried milk based protein can be obtained from, for example, condensed milk, skim milk, condensed skim milk, lactose-reduced skim milk, and a combination thereof. The skim milk can be ultra-filtered to concentrate the amount of protein in the milk. Ultra-filtered skim milk typically concentrates the protein by a factor of about five (5X skim milk). The milk can come from, for example, cows, goats, or sheep. In one embodiment of the invention, the moisture barrier includes about 3 to about 6 weight percent dried milk.

The moisture barrier can further comprise various disaccharides such as, for example, lactose and sucrose. Other sweeteners can be added. In one embodiment, the moisture barrier contains less than about 10 weight percent sucrose.

The moisture barrier can further comprise a flavoring, a colorant, a spice, cocoa, chocolate liqueur, ground coffee, an emulsifying agent such as lecithin, or a mixture thereof.

In other embodiments of the invention, the moisture barrier contains about 20 to about 60 weight percent of a confectionary coating. Additionally, the moisture barrier contains about 40 to about 80 weight percent fat that is a liquid at 4 °C (40 °F) and that is from a source other than the confectionary coating.

As used herein, the term "confectionary coating" refers to a composition that contains cocoa butter in an amount not less than about 5 weight percent, fat in an amount not less than about 40 weight percent, sugar in an amount not greater than about 55 weight percent, and moisture in an amount less than about 1 weight percent based on the weight of the confectionary coating. Suitable confectionary coatings include, for example, white chocolate coatings, dark chocolate coatings, milk chocolate coatings, buttermilk chocolate coatings, skim milk chocolate coatings, or mixtures thereof. The confectionary coating can be sweet, semi-sweet, or bittersweet.

In one embodiment, the confectionary coating is a white chocolate coating. Suitable white chocolate coating typically contain about 40 to about 60 weight percent fat. Some, but not all, of the fat in the white chocolate coating is a liquid at 4 °C (40 °F). In one embodiments, the white chocolate coating contains about 45 to about 55 weight percent fat, about 3 to about 7 weight percent protein, about 5 to about 10 weight percent lactose, and about 30 to about 35 weight percent sucrose. Such white chocolate coatings can be obtained from Barry Callebaut of St. Albans, VT prepared from sugar, cocoa butter, coconut oil, whole milk powder, soybean oil, skim milk powder, soya lecithin, and vanilla extract.

Moisture barriers having about 10 to about 20 weight percent confectionary coating tend to harden into a layer with large cracks. On the other hand, moisture barriers having more than about 60 weight percent confectionary coating tend to harden into a layer that pulls away from the sides of the container leaving some of the frozen dessert not covered by the moisture barrier.

In some embodiments, the moisture barrier contains confectionary coating in an amount of about 25 to about 35 weight percent and fat in an amount of about 65 to about 75 weight percent based on the weight of the moisture barrier. The moisture barrier can contain confectionary coating in an amount of about 30 weight percent and fat in an amount of about 70 weight percent based on the weight of the moisture barrier. The fat is from a source other than the confectionary coating and is liquid at 4 °C (40 °F).

One of the primary functions of the moisture barrier is to minimize contact of the glassy matrix topping and the frozen dessert during storage. If the moisture level in the glassy matrix topping exceeds about 6 weight percent, the glassy matrix topping tends to loose crispiness. If the moisture level in the glassy matrix topping exceeds about 15 weight percent, the glassy matrix topping tends to become syrupy or dissolve.

The sweet, glassy matrix topping is placed over the moisture barrier and is separated from the frozen dessert by the moisture barrier. As used herein, the term "glassy matrix topping" refers a topping having a glassy matrix. As used herein, the phrase "glassy matrix" refers to a material prepared by forming a melt from sucrose; a polysaccharide having an average degree of polymerization of about 2 to about 4, or a mixture thereof. As used herein, the phrase "glassy phase" refers a material having an amorphous rather than crystalline structure. The glassy phase is typically hard and brittle. The glassy matrix further comprises crystalline sucrose embedded into the glassy phase material. The glassy matrix topping can further comprise a glassy matrix coating. As used herein, the phrase "glassy matrix coating" refers to a coating covering at least one surface of a glassy matrix.

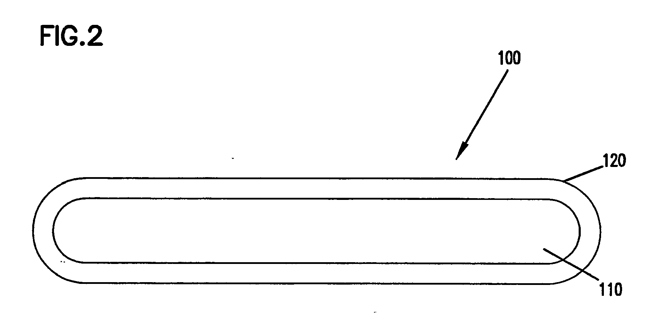

**Figure 2** shows a schematic of one embodiment of a glassy matrix topping 100 in a cross-sectional side view. The glassy matrix **110** is surrounded on all sides by a glassy matrix coating **120.** The dimensions of the various components are not drawn to scale.

The thickness of the glassy matrix topping is typically in the range of about 1 mm to about 3 mm. Thinner toppings can be difficult to manufacture and tend to be less stable. On the other hand, thicker toppings are more difficult to chew by the consumer.

The glassy matrix comprises sucrose, a polysaccharide having an average degree of polymerization of about 2 to about 4, or a mixture thereof. As used herein, the terms "degree of polymerization" or "DP" refer to the number of saccharide units combined in the polysaccharide. Suitable polysaccharides include, for example, a corn syrup, a polydextrose, a partially hydrolyzed inulin, a partially hydrolyzed guar gum, or a mixture thereof. Suitable corn syrups have a dextrose equivalent value of about 30 to about 50. High maltose corn syrup can be used.

As used herein, the phrases "dextrose equivalent value" and "DE value" refer to a measure of the reducing sugar content calculated as percent dextrose. The DE value and the DP are both a measure of the molecular weight of the polysaccharide. For example, a corn syrup having a DE value of 50 has a lower molecular weight and is sweeter than a corn syrup having a DE value of 30. A polysaccharide having an average DP of 2 has a lower molecular weight and is sweeter than a polysaccharide having an average DP of 4.

As used herein, the term "polydextrose" refers to a synthetic material containing multiple dextrose (glucose) units. The material typically contains small amounts of citric acid esters.

The suitability of a glassy matrix topping for a frozen dessert product depends on a number of factors including appearance, stickiness, crispiness, brittleness, transparency, and taste. Preferably, the glassy matrix is sweet, non-sticky, and brittle. The stickiness, crispiness, and brittleness can be related to the hygroscopic tendencies of the glassy matrix. A suitable glassy matrix is stable; as used herein, the term "stable" refers to a glassy matrix topping that picks up less than about five weight percent moisture during storage for five months at -23 °C (-10 °F) with a moisture barrier of the invention placed between the glassy matrix topping and the frozen dessert.

The glassy matrix is prepared by heating sucrose, a polysaccharide having an average DP of about 2 to about 4, or a mixture thereof above the melting point. The melt is cooled to form a viscous syrup and then a glassy phase. The processing temperature required to form a melt is related to the dextrose equivalent value, the degree of polymerization, or the molecular weight of the materials in the glassy matrix. Sucrose can be processed at a lower temperature than polysaccharides such as corn syrup, polydextrose, partially hydrolyzed inulin, and partially hydrolyzed guar gums. A higher processing temperature is required as the molecular weight of the polysaccharide increases. Thus, a glassy matrix topping made from a 42 DE corn syrup can be processed at a lower temperature than a 36 DE corn syrup. Similarly, a glassy matrix topping made with partially hydrolyzed inulin having an average degree of polymerization of 2 can be processed at a lower temperature than a partially hydrolyzed inulin having a degree of polymerization of 4.

A suitable glassy matrix topping is made from sucrose. Such a topping is sweet and can be stable with a good moisture barrier in place. However, glassy phase sucrose tends to adsorb moisture readily. If the moisture barrier is ineffective, a sucrose glassy matrix tends to be unstable. The stability can be improved by coating the sucrose glassy matrix with a glassy matrix coating.

A polysaccharide having an average degree of polymerization of about 2 to about 4 is also used to prepare a suitable glassy matrix without the addition of sucrose. The polysaccharide can include corn syrup having a DE value of about 30 to about 50, polydextrose, partially hydrolyzed inulin, partially hydrolyzed guar gum, or a mixture thereof. In some embodiments, the polysaccharide is a corn syrup having a DE value of 42 or 36.

A polysaccharide having an average degree of polymerization less than about 2, corresponding to a corn syrup having a dextrose equivalent value greater than about 50, tends to be too hygroscopic. A glassy matrix prepared from such materials tends to be sticky. On the other hand, a polysaccharide having an average degree of polymerization greater than about 4, corresponding to corn syrup or polydextrose having a dextrose equivalent value less than about 30, tend to result in a glassy matrix that is hard to chew and that can stick to the teeth of a consumer.

Corn syrup, polydextrose, and partially hydrolyzed inulin are commercially available as either liquids with about 18 to about 22 weight percent water or as solids with about 5 weight percent water. Either the liquid or the solid can be used. Boiling or evaporation is used to remove the water during formation of the glassy matrix topping.

A glassy matrix is prepared from sucrose in combination with a polysaccharide having an average DP of about 2 to about 4. A mixture of polysaccharides can be used. Any amount of sucrose can be included. Sucrose lowers the required processing temperature of the glassy matrix and improves the sweetness of the topping. A glassy matrix topping with a high concentration of sucrose tends be sticky because glassy phase sucrose readily adsorbs moisture. However, if a crack-free moisture barrier is in place that completely covers all exposed surfaces of the frozen dessert, high concentrations of non-crystalline sucrose can be used in the glassy matrix topping. As used herein, the phrase "exposed surface" refers to a surface of the frozen dessert that is not in contact with a bottom or a sidewall of a container holding the frozen dessert.

Any of the above mentioned glassy matrix toppings contain crystalline materials such as crystalline sucrose. Crystalline sucrose has a low tendency to pick up moisture and can increase the stability of the glassy matrix topping. Sucrose crystals are embedded in the glassy phase of the glassy matrix. There is no lower limit to the amount of crystalline sucrose that can be added. However, if too much crystalline sucrose is added, the glassy matrix topping will not be brittle. As used herein, the term "brittle" refers to a glassy matrix topping that is readily broken. In some embodiments, the brittle topping shatters when broken. A non-brittle topping typically will not shatter.

In some embodiments of a glassy matrix with embedded crystalline sucrose, the glassy matrix contains crystalline sucrose in an amount of about 20 to about 60 weight percent based on the weight of the glassy matrix. Additionally, the glassy matrix contains about 40 to about 80 weight percent of a glassy phase comprising sucrose, a polysaccharide having an average DP of about 2 to about 4, or a combination thereof. In one example, the glassy phase contains corn syrup having a DE value of 42 in an amount of about 40 to about 80 weight percent based on the weight of the glassy matrix. In another example, the glassy phase contains corn syrup having a dextrose equivalent value of 42 in an amount of about 20 to about 80 percent and sucrose in an amount up to about 20 weight percent based on the weight of the glassy matrix.

The glassy matrix can further comprise flavorants, colorants, non-nutritive sweeteners, or combinations thereof.

The glassy matrix topping can comprise a glassy matrix and a glassy matrix coating covering at least one surface of the glassy matrix. In some embodiments, the glassy matrix coating covers all surfaces of the glassy matrix. The thickness of the glassy matrix coating typically ranges from about 0.05 mm to about 0.5 mm. The glassy matrix coating is typically added to the glassy matrix to prepare a glassy matrix topping with improved stability. In some embodiments, the glassy matrix coating is transparent and not discernible to the consumer. In other embodiments, the glassy matrix coating is opaque.

A transparent glassy matrix coating is prepared, for example, from various food oils, an edible shellac, an acetylated monoglyceride, a Salatrim modified fat, or a mixture thereof. Suitable food oils include soybean oil, canola oil, cottonseed oil, peanut oil, safflower oil, corn oil, or mixtures thereof. As used herein, the term "Salatrim" is an acronym for short and long-chain acyl triglyceride molecule. Salatrim typically contains about 30 to 67 mole percent short-chain fatty acids and about 33 to 70 mole percent long-chain fatty acids.

Any of the formulations used to prepare the moisture barrier can be used to as a glassy matrix coating. The formulations containing confectionary coatings are usually opaque.

Further, any of the formulations of the glassy matrix coating can contain up to about 1 weight percent emulsifier. Suitable emulsifiers include, for example, lecithin and polyglycerol esters of fatty acids. The emulsifiers can improve the flow properties of the glassy matrix coating and can alter how the fat in the glassy matrix coating crystallizes

The glassy matrix topping can have any shape but the shape typically conforms to that of a container for the frozen dessert product The glassy matrix topping generally has dimensions smaller than the container and does not contact an inner surface of the container sidewalls.

The present application further describes a method of preparing a frozen dessert product having a sweet, thin, crunchy, and brittle topping. The method comprises (a) covering at least one surface of the frozen dessert with a moisture barrier; and (b) placing a thin, sweet, glassy matrix topping over the moisture barrier.

In one embodiment, the frozen dessert is not in a container. The frozen dessert can be, for example, in the shape of a disk, rectangle, cylinder, or cube. All the sides of the frozen dessert or all the sides of the frozen dessert but the bottom surface ore covered with the moisture barrier. The glassy matrix topping is placed over the moisture barrier on one surface of the frozen dessert.

In other embodiments, the frozen dessert is placed in a disposable container at a temperature such that the frozen dessert conforms to the shape of a container. Only the top surface of the frozen dessert is not in contact with either the bottom or sidewalls of the container. The moisture barrier completely covers the top surface of the frozen dessert and extends to contact the inner surfaces of the container sidewalls. The glassy matrix topping is placed over the moisture barrier and is separated from the frozen dessert by the moisture barrier.

The frozen dessert usually can be extrude into a container at a temperature close to about -7 °C (20 °F). The temperature of the frozen dessert should be warm enough to allow the frozen dessert to flow resulting in a flat top surface. The frozen dessert can conform to the shape of the container such that the only surface of the frozen dessert not in contact with the container is the top surface.

The moisture barrier is typically fluid when applied to the frozen dessert and spreads easily and evenly over any exposed surface of the frozen dessert to completely cover the surface. The moisture barrier then hardens slowly upon contact with the frozen dessert. If the moisture barrier hardens too rapidly, obtaining complete coverage of an exposed surface of the frozen dessert can be difficult. When the frozen dessert is in a container, the moisture barrier preferably hardens such that the moisture barrier does not pull away from the inner surfaces of the container sidewalls leaving a portion of the frozen dessert near the container sidewalls uncovered by the moisture barrier. The hardened moisture barrier preferably totally covers all surfaces of the frozen dessert that are not in contact with the container and contacts the inner surface of the container sidewalls.

The moisture barrier can be applied to the exposed surfaces of the frozen dessert using any suitable method such as spraying, spreading, or flowing. The thickness typically is about 1 to about 3 mm. In one embodiment, the frozen dessert is in a container and the moisture barrier is added to the center of the exposed top surface of the frozen dessert. The container is rotated to spread the moisture barrier evenly over the top surface of the frozen dessert and contact the inner surfaces of the container sidewalls with the moisture barrier.

The moisture barrier comprises at least 70 weight percent fat based on the weight of the moisture barrier. At least 60 percent of the fat in the moisture barrier is liquid when stored at 4 °C (40 °F). The moisture barrier is prepared by mixing the fat and other ingredients at a temperature high enough to form a fluid composition. Typically, the moisture barrier is formed at a temperature in the range of about 32 °C (90 °F) to about 38 °C (100 °F) and applied to the frozen dessert when the moisture barrier composition is at a temperature of about 21 °C (70 °F) to about 32 °C (90 °F).

If the moisture barrier is applied at a temperature of about 21 °C (70 °F) to about 32 °C (90 °F) and the frozen dessert is hard, little melting of the frozen dessert occurs. However, if higher application temperatures are used, some of the frozen dessert can melt. Excessive melting of the frozen dessert tends to result in a moisture barrier having unacceptable moisture content The moisture content is preferably less than about 1 weight percent.

The glassy matrix topping is typically prepared prior to being placed on the moisture barrier covering the exposed surfaces of the frozen dessert. The glassy matrix topping is prepared by forming a melt containing sucrose, a polysaccharide having an average DP or about 2 to about 4, or a combination thereof. As used herein, the term "melt" refers to a fluid essentially free of water formed above the melting point of sucrose, corn syrup, polydextrose, partially hydrolyzed inulin, or combination thereof. Boiling or evaporation during the process of forming the melt can be used to remove any water present in the sucrose or polysaccharide because boiling occurs at a lower temperature than melting.

In one embodiment, the melt is spread to a thickness of about 1 mm to about 3 mm on a flat surface and then cooled to form a viscous syrup. The viscous syrup is then cut to the desired size and shape before it hardens to form a glassy matrix. In one embodiment, the viscous syrup is cut to a shape conforming to that of the container. The size is generally selected to be smaller than the container so that the glassy matrix topping does not touch the inner surface of the container sidewalls.

The melt can also be placed in a shallow mold. The thickness of the melt in the mold is about 1 mm to about 3 mm. The melt is cooled to form a viscous syrup and then a glassy matrix. The glassy matrix is separated from the mold. The shape of the mold can conform to the shape of the container for the frozen dessert product. Typically, the size of the mold is selected so that the glassy matrix topping does not touch the inner surface of the container sidewalls.

Crystalline sucrose can be embedded into the glassy matrix when the composition is viscous syrup. Suitable crystalline sucrose includes medium or coarse grain sugar. In some embodiments the crystalline sugar is tinted brown. The crystalline sucrose is added at a temperature below its melting point. The melting point is usually close to about 190 °C (374 °F) but some melting can occur at lower temperatures. The crystalline sucrose usually can be added at about 171 °C (340 °F).

In some embodiments, the glassy matrix is coated with a glassy matrix coating. The thickness of the glassy matrix coating is about 0.05 mm to about 0.5 mm. The glassy matrix coating is a solid at the temperatures used to store the frozen dessert product and can be either transparent or opaque.

A transparent coating can be prepared from a food oil, an edible shellac, beeswax, an acetylated monoglyceride, a Salatrim modified fat, or a mixture thereof. Suitable food oils include, for example, soybean oil, canola oil, cottonseed oil, peanut oil, safflower oil, corn oil, or a mixture thereof.

A glassy matrix coating can be prepared using any of the formulations described above for the moisture barrier. The formulations containing confectionary coatings are usually opaque.

The glassy matrix coating can be applied by any known method including, for example, dipping, flowing, or spraying. The glassy matrix coating is applied at a temperature high enough to form a fluid coating composition but not high enough to melt the glassy matrix. For example, the glassy matrix coating can be prepared at a temperature in the range of about 32 °C (90 °F) to about 38 °C (100 °F) and applied to the glassy matrix at a temperature of about 21 °C (70 °F) to about 32 °C (90 °F).

The glassy matrix coating can be applied to one or all surfaces of the glassy matrix. In one embodiment, the glassy matrix coating covers all surfaces of the glassy matrix. To prepare such a glassy matrix topping, the glassy matrix can be dipped in the glassy matrix coating. The coating is fluid when applied and solidifies upon cooling.

In other embodiments, the glassy matrix coating covers only the surfaces of the glassy matrix that are not in contact with the moisture barrier. To prepare a glassy matrix topping coated on one side, the coating composition can be applied, for example, by placing glassy matrix coating composition near the center of the surface to be coated. The glassy matrix can be rotated to spread the glassy matrix coating composition uniformly over the surface of the glassy matrix. The coating is fluid when applied and solidifies upon cooling.

A frozen dessert product having the glassy matrix coating on only one surface of the glassy matrix can also be prepared, for example, by placing a glassy matrix over the moisture barrier and spraying the glassy matrix coating to cover the glassy matrix.

The frozen dessert product of the invention has a topping that does not dissolve upon extended storage but remains crunchy, brittle, and non-sticky. The glassy matrix topping usually retains low moisture levels upon extended storage of the frozen dessert product at freezer temperatures. Preferably, the glassy matrix picks up less than about 5 weight percent moisture upon storage for five months at -23 °C (10 °F) when a moisture barrier of the invention is present to separate the frozen dessert from the glassy matrix topping. Preferably, there are no cracks in the moisture barrier or the glassy matrix coating.

The following examples further describe the various compositions and methods of the invention. The examples are provided for exemplary purposes to facilitate understanding of the inventions and should not be considered to limit the invention to the examples.

### EXAMPLES

### Example 1

### Preparation of Moisture Barrier

Moisture barriers **(Examples 1a, 1b, 1c, and 1d)** were prepared according to the claims of the invention by mixing various fat compositions with a white chocolate coating. The white chocolate coating, obtained from Barry Callebaut of St. Albans, VT, contained sugar, cocoa butter, coconut oil, whole milk powder, soybean oil, skim milk powder, soya lecithin, and vanilla extract. The white chocolate contains 52 ± 3 weight percent fat and less than 1 weight percent moisture. About 85 percent of the particles in the white chocolate coating were less than 30 microns.

The compositions of the moisture barriers are shown in Table 1.

**Table 1: Composition of Moisture Barriers**

| | **Example 1A** | **Example 1B** | **Example 1C** | **Example 1D** | **Example 1E** |
|---|---|---|---|---|---|
| **Cottonseed oil, wt. %** | 70 | 71 | 71 | 74 | 72 |
| **White chocolate coating, wt. %** | 30 | 25 | 25 | 20 | 20 |
| **Cocoa butter, wt. %** | | 1.5 | 2.5 | 3.5 | 4.5 |
| **Coconut oil, wt.%** | | 2.5 | 1.5 | 2.5 | 3.5 |

The chemical analysis of the moisture barriers are in Table 2.

**Table 2: Chemical Analysis of the Moisture Barriers**

| | **Example 1A** | **Example 1B** | **Example 1C** | **Example 1D** | **Example 1E** |
|---|---|---|---|---|---|
| **Sucrose, wt. %** | 9.7 | 8.1 | 8.1 | 6.5 | 6.5 |
| **Fat, wt. %** | 85.6 | 88.0 | 88.0 | 90.4 | 90.4 |
| **Lactose, wt. %** | 2.2 | 1.8 | 1.8 | 1.4 | 1.4 |
| **Protein, wt. %** | 1.6 | 1.3 | 1.3 | 1.1 | 1.1 |

The fats and the white chocolate coating were mixed together and heated to form a fluid composition at 35 °C (95 °F) to 38 °C (100 °F).

### Comparative Example 1

### Preparation of Moisture Barrier

A moisture barrier having a fat content outside the range of the invention was prepared as describe in Table 3.

**Table 3: Composition of Comparative Moisture Barrier**

| | **Comparative Example 1** |
|---|---|
| **Cottonseed oil, wt. %** | 39 |
| **Coconut oil, wt. %** | 21 |
| **Ground sugar, wt. %** | 24 |
| **Cocoa solids, wt. %** | 6 |
| **Dried milk solids, wt. %** | 10 |
| **Total, wt. %** | 100 |

The sucrose was ground in a water cooled micro mill (available from Technilab Instruments; Pequannock, NJ). All the ground sucrose passed through a 270 mesh screen (53 microns) and a majority of the ground sucrose passed through a 325 mesh screen (44 microns). The ground sucrose was stored in a 53 percent humidity chamber for three days to crystallize all amorphous surfaces. The sucrose was then stored in a desiccator over anhydrous calcium sulfate.

The cocoa solids, obtained from Barry Callebaut of St. Albans, VT, contained less than 1 weight percent fat. At least 99.5 weight percent of the cocoa solids passed through a 200 mesh screen (75 microns).

The nonfat dried milk contained 35 weight percent protein, 4 weight percent moisture, 52 weight percent lactose, and a maximum of 1.25 weight percent fat. The dried milk was ground with a mortar and pestle to reduce the particle size.

The oils were mixed together and warmed to 30 °C. Ground sugar, cocoa solids, and dried milk powder were stirred into the oil. The mixture was placed in a micro mill for five minutes or more to make the coating smooth. After milling, most particles remained suspended.

### Example 2

### Preparation of Glassy Matrix Topping

Aluminum foil was placed on a flat baking sheet having sides. The aluminum foil was sprayed lightly with oil. A thin layer of sucrose was sprinkled on the aluminum foil covered baking sheet. The baking sheet was then placed in an oven at 232 °C (450 °F). The sucrose melted and turned brown. The melt was removed from the oven and cooled to a viscous syrup.

A 5.4 cm (2.1 inch) diameter round cutter was pressed into the hot, viscous sucrose syrup. The round cutter left an impression and scored the material. Upon further cooling, the viscous syrup became a glassy matrix. After the glassy matrix was completely cooled, the sides around the score were broken off resulting in the production of a sucrose glassy matrix disk.

The weight of the glassy matrix disks varied from about 4.2 to about 5.2 grams.

The glass matrix disks were stored in a covered container to keep out moisture.

### Example 3

### Evaluation of Moisture Barriers at -7 °C (20 °F) Ice Cream with Storage at -23 °C (-10 °F).

The frozen dessert used was vanilla ice cream hardened in a 1.2 ℓ (4.2 fluid ounce) cup with about 1 centimeter headspace. The ice cream was leveled in the cup.

The ice cream was placed in a freezer at -7 °C (20 °F) overnight with a lid over each cup. The lids were removed from the cup and wiped to removed moisture. The moisture barrier was applied by warming the coatings prepared in Example 1 and Comparative Example 1 to about 32 °C (90 °F) in a microwave. About 3.5 g of the coating was weighed and poured over the top of the ice cream. The temperature of the coating was about 27 °C (80 °F) when applied to the ice cream. The cup was rotated quickly so the coating spread evenly on the ice cream surface. A spoon was used, if needed, to spread coating onto any uncoated areas. The top surface of the ice cream was completely covered with the moisture barrier. Each moisture barrier was applied to two ice cream samples. The repeated samples are labeled as "X-1" and "X-2" where X is 1A, 1B, 1C, 1D, 1E, and Comparative 1.

The coated ice cream was covered with a lid and placed in a blast freezer held at -40 °C (-40 °F) for one hour to harden the coating. This simulates temperature gradients a product might encounter during manufacturing. The product was removed from the blast freezer and stored temporarily at -18 °C (0 °F). The glassy matrix disks prepared as described in Example 2 were weighed to the nearest 0.0001 gram. A glassy matrix disk was placed over the moisture barrier in each cup. The product was stored at -23 °C (-10 °F). The glassy matrix disk was re-weighed and the percent weight gain calculated after storage for 30, 71, and 139 days. The weight gain relates to the amount of moisture the glassy matrix adsorbed over time. The data is shown in Table 4.

**Table 4: Weight Gain of Glassy Disks - 30 days at -23 °C (-10 °F)**

| **Example** | **Wt. % Gain** **after 30 days** | **Wt. % Gain** **after 71 days** | **Wt. % Gain** **after 139 days** |
|---|---|---|---|
| 1A-1 | 0.8 | 1.7 | 3.5 |
| 1A-2 | 0.5 | 1.1 | 1.7 |
| 1B-1 | 0.6 | 1.2 | 2.0 |
| 1B-2 | 0.5 | 1.0 | 1.5 |
| 1C-1 | 0.7 | 1.2 | 1.6 |
| 1C-2 | 0.4 | 0.9 | 1.4 |
| 1D-1 | 0.6 | 1.1 | 1.7 |
| 1D-2 | 0.6 | 1.1 | 1.8 |
| 1E-1 | 0.7 | 1.5 | 3.2 |
| 1E-2 | 0.8 | 1.3 | 1.9 |
| Comparative 1-1 | 2.2 | 4.7 | 8.0 |
| Comparative 1-2 | 2.0 | 4.3 | 6.6 |

The comparative example coatings cracked after blast freezing and the glassy disk above these coating picked up the most moisture.

### Example 4

### Preparation of Glassy Matrix Topping Made from 42 DE Corn Syrup and Crystalline Sucrose

The combination of 42 DE corn syrup and sucrose were used to prepare a glassy matrix. The corn sryup was Staley's 7300 Neto 42 DE corn syrup available from A. E. Staley Manufacturing Co. in Decatur, Il. The corn syrup contained 19.6% moisture. Sucrose and corn syrup were mixed such that the weight ratio of sucrose to corn syrup solids was about 1:9 (sucrose: corn syrup solids). The mixture was heated until the sucrose dissolved.

The mixture was spread thin onto an oiled, foil-lined baking sheet. The baking sheet was then placed in an oven at 191 °C (375 °F) The syrup boiled and the water was removed. The mixture turned slightly brown. The melt was removed from the oven and cooled to form a viscous syrup.

A 5.4 cm (2.1 inch) diameter cutter was pressed into the hot, viscous sucrose syrup, leaving an impression or a score. Upon further cooling, the viscous syrup became a glassy matrix. After the glassy matrix was completely cooled, the sides around the score were broken off resulting in the production of a glass matrix disk.

Glassy matrix disks weighing in the range of 3.8 grams to 4.5 grams were selected and placed on a oiled, foil lined pan. The pan containing the glassy matrix disks was placed in a 182°C (360°C) oven and the glassy matrix disks were melted again. The disks melted in about 4 minutes. The pan was removed from the oven and about 1 gram of large sanding sugar (crystalline sucrose) was sprinkled onto each of the melted disk in the pan. The pan was then put back in the oven for another 3 minutes. The pan was removed from the oven and the sucrose crystals were pressed into the melted disks with a piece of flattened metal. The pan was returned to oven for 3 minutes. After removal of the pan from the oven, the samples were cooled to a viscous syrup and then pressed with a cutter. After cooling, the edges were broken away to produce a 2.5 cm diameter glassy matrix disc containing about 20 weight percent embedded crystalline sucrose. The glassy phase of the glassy matrix is about 90 weight percent 42 DE corn syrup and about 10 weight percent sucrose.

### Example 5

### Evaluation of Glasses, Coatings and Moisture Barriers Applied to -18 °C (0 °F) Ice Cream with Storage at -18 °C (0 °F)

The frozen dessert used was vanilla ice cream hardened in a 4.2 fluid ounce cup with about 1 centimeter headspace and having a leveled ice cream surface.

The moisture barrier was applied by warming a compositions of Example 1A and Comparative Example 1 to about 35 °C (95 °F). About 3.5 g of the moisture barrier was poured at 27 °C (80 °F) over the top of the ice cream that was at about 0 -18 °C (0 °F). The cup was rotated quickly so the coating was spread evenly on the ice cream surface. A spoon was used, if needed, to spread coating onto any uncoated areas. The top surface of the ice cream was completely covered with the moisture barrier. The ice cream with moisture barrier was placed in a -18 °C (0 °F) freezer to harden the moisture barrier for several hours.

The glass matrix disks were those prepared in Examples 2 and 4. The glass matrix disks were weighed to the nearest 0.0001 gram. All discs weighed between 4.3 and 5.0 grams. Some disks were dipped in a shellac coating (Capol 153D provided by CenterChem, Inc of Stamford, CT). These disks were then drained, dried and reweighed. The coating weighed 0.10 -.12 g. A weighed glassy disk was placed onto the ice cream coated with a moisture barrier and covered with a tight fitting lid. Duplicate samples were made of each variable. The product was placed in a freezer set at -18 °C (0 °F) for storage. The glassy disks were weighed periodically to determine how much moisture was picked up. The data is shown in Table 5.

**Table 5: Averaged Weight Gain of Two Glassy Disks at -18 °C (0 °F)**

| **Example** | **Barrier** | **Glass matrix composition.** | **Glass Coating** | **30 days** | **71 days** | **139 days** | **214 days** | **301 days** |
|---|---|---|---|---|---|---|---|---|
| Comp. Ex. 5 | Comp. Ex. 1 | Example 2 | None | 3.1% | 6.2% | 11.4% | | |
| Example 5-1 | Example 1A | Example 2 | None | 1.1% | 2.0% | 4.0% | 6.3% | 9.7.% |
| Example 5-2 | Example 1A | Example 2 | Shellac | 0.6% | 1.2% | 2.1% | 3.5% | 5.2% |
| Example 5-3 | Example 1A | Example 4 | None | 0.9% | 1.6% | 3.1% | 5.2% | 7.8% |
| Example 5-4 | Example 1A | Example 4 | Shellac | 0.5% | 1.1% | 2.0% | 3.4% | 5.1% |

The amount of weight gain related to the amount of moisture adsorbed by the glassy matrix topping. The lower the amount of moisture adsorbed, the better the stability of the frozen dessert product. Frozen dessert products having a moisture barrier that is not in accord with the claims of the present invention (Comparative Example 5) are not stable. The glassy matrix coating picked up large amounts of moisture resulting from the visible cracks in the moisture barrier.

A glassy matrix topping having a glassy matrix prepared from only sucrose and having no glassy matrix topping picked up more moisture than a glass matrix topping prepared from a mixture of sucrose and corn syrup. Adding a glassy matrix coating to the glassy matrix improved the stability of the product

## Claims

1. A composition comprising:
(a) a frozen dessert;
(b) a moisture barrier covering at least one surface of the frozen dessert; and
(c) a sweet, glassy matrix topping placed over the moisture barrier, the glassy matrix topping comprising a glassy matrix, wherein the glassy matrix comprises sucrose, a polysaccharide having an average degree of polymerization of 2 to 4, or a mixture thereof, and wherein the glassy matrix further comprises embedded crystalline sucrose.

2. The composition of claim 1, wherein the frozen dessert comprises frozen custard, ice cream, ice milk, gelato, milk shakes, frozen yogurt, pudding, sherbet, or sorbet.

3. The composition of claim 1, wherein the moisture barrier comprises fat in an amount of at least 70 weight percent based on the weight of the moisture barrier, wherein at least 60 weight percent of the fat is liquid when stored at 4 °C (40 °F).

4. The composition of claim 3, wherein the fat that is liquid when stored at 4 °C (40 °F) comprises a food oil, a medium chain length triglyceride, or a mixture thereof.

5. The composition of claim 4, wherein the food oil is soybean oil, cottonseed oil, peanut oil, sunflower oil, safflower oil, corn oil, canola oil, or a mixture thereof.

6. The composition of claim 3, wherein the fat contains up to 40 weight percent coconut oil, cocoa butter, butter, palm oil, palm kernel oil, hydrogenated oils, or mixtures thereof.

7. The composition of claim 3, wherein the fat comprises
(a) a food oil, medium chain length triglyceride, or mixture thereof that is a liquid when stored at 4 °C (40 °F) in an amount of 82 to 86 weight percent based on the weight of the fat; and
(b) coconut oil, cocoa butter, butter, palm oil, palm kernel, hydrogenated oil, or a mixture thereof in an amount of 14 to 18 weight percent based on the weight of the fat.

8. The composition of claim 7, wherein the food oil that is a liquid when stored at 4 °C (40 °F) is soybean oil, cottonseed oil, peanut oil, sunflower oil, safflower oil, corn oil, canola oil, or a mixture thereof.

9. The composition of claim 3, wherein the moisture barrier further comprises milk protein.

10. The composition of claim 3, wherein the moisture barrier further comprises one or more disaccharides.

11. The composition of claim 3, wherein the moisture barrier further comprises a flavoring, a spice, cocoa, chocolate coating liqueur, ground coffee, an emulsifying agent, or a mixture thereof.

12. The composition of claim 1, wherein the moisture barrier comprises
(a) confectionary coating in an amount of 20 to 60 weight percent based on the weight of the moisture barrier; and
(b) fat in an amount of 40 to 80 weight percent based on the weight of the moisture barrier, wherein the fat is a liquid at 4 °C (40 °F) and the fat is from a source other than the confectionary coating.

13. The composition of claim 12, wherein the moisture barrier contains confectionary coating in an amount of 25 to 35 weight percent and fat in an amount of 65 to 75 weight percent.

14. The composition of claim 12, wherein the moisture barrier contains confectionary coating in an amount of 30 weight percent and fat in an amount of 70 weight percent.

15. The composition of claim 12, wherein the confectionary coating comprises fat in an amount of 45 to 55 weight percent, protein in an amount of 3 to 7 weight percent, lactose in an amount of 5 to 10 weight percent, and sucrose in an amount of 30 to 35 weight percent based on the weight of the confectionary coating.

16. The composition of claim 12, wherein the confectionary coating is a white chocolate coating, a dark chocolate coating, a milk chocolate coating, a buttermilk chocolate coating, a skim milk chocolate coating, or a mixture thereof.

17. The composition of claim 12, wherein the confectionary coating is a white chocolate coating.

18. The composition of claim 1, wherein the polysaccharide is a polydextrose, a partially hydrolyzed inulin, a partially hydrolyzed guar gum, a corn syrup having a dextrose equivalent value of 30 to 50, or a mixture thereof.

19. The composition of claim 18, wherein the glassy matrix comprises corn syrup having a dextrose equivalent value of 42.

20. The composition of claim 1, wherein the glassy matrix comprises
(a) embedded crystalline sucrose in an amount of 20 to 60 weight percent based on the weight of the glassy matrix; and
(b) a glassy phase in an amount of 40 to 80 weight percent based on the weight of the glassy matrix.

21. The composition of claim 20, wherein the glassy phase comprises sucrose in an amount up to 20 weight percent based on the weight of the glassy matrix and corn syrup in an amount of 20 to 80 weight percent based on the weight of the glassy matrix, the corn syrup having a dextrose equivalent value of 42.

22. The composition of claim 1, wherein the glassy matrix topping is 1 mm to 3 mm thick.

23. The composition of claim 1, wherein the glassy matrix topping further comprises a glassy matrix coating covering at least one surface of the glassy matrix.

24. The composition of claim 23, wherein the glassy matrix coating comprises a food oil, an edible shellac, beeswax, an acetylated monoglyceride, a Salatrim modified fat, or a mixture thereof.

25. The composition of claim 24, wherein the food oil is soybean oil, canola oil, cottonseed oil, peanut oil, safflower oil, sunflower oil, corn oil, or mixtures thereof.

## Patentansprüche

1. Zusammensetzung, umfassend:
(a) ein gefrorenes Dessert;
(b) eine Feuchtigkeitssperre, die wenigstens eine Oberfläche des gefrorenen Desserts bedeckt; und
(c) eine süße, glasartige-Matrix-Deckschicht, die über der Feuchtigkeitssperre angeordnet ist, wobei die glasartige-Matrix-Deckschicht eine glasartige Matrix umfasst, wobei die glasartige Matrix Sucrose, ein Polysaccharid mit einem mittleren Polymerisationsgrad von 2 bis 4 oder ein Gemisch davon umfasst, und wobei die glasartige Matrix ferner eingebettete, kristalline Sucrose umfasst.

2. Zusammensetzung gemäß Anspruch 1, wobei das gefrorene Dessert gefrorene Vanillesauce, Eiscreme, Eismilch, Gelato, Milchshakes, gefrorenes Joghurt, Pudding, Brause oder Sorbet umfasst.

3. Zusammensetzung gemäß Anspruch 1, wobei die Feuchtigkeitssperre Fett in einer Menge von wenigstens 70 Gew.-%, bezogen auf das Gewicht der Feuchtigkeitssperre, umfasst, wobei wenigstens 60 Gew.-% des Fetts bei Lagerung bei 4 °C (40 °F) flüssig ist.

4. Zusammensetzung gemäß Anspruch 3, wobei das Fett, welches bei Lagerung bei 4 °C (40 °F) flüssig ist, ein Speiseöl, ein Triglycerid mit mittlerer Kettenlänge oder ein Gemisch davon umfasst.

5. Zusammensetzung gemäß Anspruch 4, wobei das Speiseöl Sojabohnenöl, Baumwollsamenöl, Erdnussöl, Sonnenblumenöl, Distelöl, Maisöl, Rapsöl oder ein Gemisch davon ist.

6. Zusammensetzung gemäß Anspruch 3, wobei das Fett bis zu 40 Ges.-% Kokosnussöl, Kakaobutter, Butter, Palmöl, Palmkernöl, hydrierte Öle oder Gemische davon umfasst.

7. Zusammensetzung gemäß Anspruch 3, wobei das Fett
(a) ein Speiseöl, Triglycerid mit mittlerer Kettenlänge oder ein Gemisch davon, welches bei Lagerung bei 4 °C (40 °F) flüssig ist, in einer Menge von 82 bis 86 Gew.-%, bezogen auf das Gewicht des Fetts; und
(b) Kokosnussöl, Kakaobutter, Butter, Palmöl, Palmkern, hydriertes Öl oder ein Gemisch davon in einer Menge von 14 bis 18 Ges.-%, bezogen auf das Gewicht des Fetts,
umfasst.

8. Zusammensetzung gemäß Anspruch 7, wobei das Speiseöl, welches bei Lagerung bei 4 °C (40 °F) flüssig ist, Sojabohnenöl, Baumwollsamenöl, Erdnussöl, Sonnenblumenöl, Distelöl, Maisöl, Rapsöl oder ein Gemisch davon ist.

9. Zusammensetzung gemäß Anspruch 3, wobei die Feuchtigkeitssperre ferner Milchprotein umfasst.

10. Zusammensetzung gemäß Anspruch 3, wobei die Feuchtigkeitssperre ferner ein oder mehrere Disaccharide umfasst.

11. Zusammensetzung gemäß Anspruch 3, wobei die Feuchtigkeitssperre ferner einen Aromastoff, ein Gewürz, Kakao, Schokolikörüberzug, gemahlenen Kaffee, ein Emulgierungsmittel oder ein Gemisch davon umfasst.

12. Zusammensetzung gemäß Anspruch 1, wobei die Feuchtigkeitssperre
(a) Konfektüberzug in einer Menge von 20 bis 60 Gew.-%, bezogen auf das Gewicht der Feuchtigkeitssperre; und
(b) Fett in einer Menge von 40 bis 80 Gew.-%, bezogen auf das Gewicht der Feuchtigkeitssperre, wobei das Fett bei 4 °C (40 °F) eine Flüssigkeit ist und das Fett aus einer von dem Konfektüberzug verschiedenen Quelle stammt,
umfasst.

13. Zusammensetzung gemäß Anspruch 12, wobei die Feuchtigkeitssperre Konfektüberzug in einer Menge von 25 bis 35 Gew.-% und Fett in einer Menge von 65 bis 75 Gew.-% umfasst.

14. Zusammensetzung gemäß Anspruch 12, wobei die Feuchtigkeitssperre Konfektüberzug in einer Menge von 30 Gew.-% und Fett in einer Menge von 70 Gew.-% umfasst.

15. Zusammensetzung gemäß Anspruch 12, wobei der Konfektüberzug Fett in einer Menge von 45 bis 55 Gew.-%, Protein in einer Menge von 3 bis 7 Gew.-%, Lactose in einer Menge von 5 bis 10 Gew.-% und Sucrose in einer Menge von 30 bis 35 Gew.-%, bezogen auf das Gewicht des Konfektüberzugs, umfasst.

16. Zusammensetzung gemäß Anspruch 12, wobei der Konfektüberzug ein weißer Schokoladeüberzug, ein dunkler Schokoladeüberzug, ein Milchschokoladeüberzug, ein Buttermilchschokoladeüberzug, ein Magermilchschokoladeüberzug oder ein Gemisch davon ist.

17. Zusammensetzung gemäß Anspruch 12, wobei der Konfektüberzug ein weißer Schokoladeüberzug ist.

18. Zusammensetzung gemäß Anspruch 1, wobei das Polysaccharid eine Polydextrose, ein teilhydrolysiertes Inulin, ein teilhydrolysierter Guargummi, ein Maissirup mit einer Dextroseäquivalentzahl von 30 bis 50 oder ein Gemisch davon ist.

19. Zusammensetzung gemäß Anspruch 18, wobei die glasartige Matrix Maissirup mit einer Dextroseäquivalentzahl von 42 umfasst.

20. Zusammensetzung gemäß Anspruch 1, wobei die glasartige Matrix
(a) eingebettete kristalline Sucrose in einer Menge von 20 bis 60 Gew.-%, bezogen auf das Gewicht der glasartigen Matrix; und
(b) eine glasartige Phase in einer Menge von 40 bis 80 Gew.-%, bezogen auf das Gewicht der glasartigen Matrix,
umfasst.

21. Zusammensetzung gemäß Anspruch 20, wobei die glasartige Phase Sucrose in einer Menge von bis zu 20 Gew.-%, bezogen auf das Gewicht der glasartigen Matrix, und Maissirup in einer Menge von 20 bis 80 Gew.-%, bezogen auf das Gewicht der glasartigen Matrix, umfasst, wobei der Maissirup eine Dextroseäquivalentzahl von 42 aufweist.

22. Zusammensetzung gemäß Anspruch 1, wobei die glasartige-Matrix-Deckschicht 1 mm bis 3 mm dick ist.

23. Zusammensetzung gemäß Anspruch 1, wobei die glasartige-Matrix-Deckschicht ferner eine glasartige-Matrix-Überzugsschicht an wenigstens einer Oberfläche der glasartigen Matrix aufweist.

24. Zusammensetzung gemäß Anspruch 23, wobei der glasartige-Matrix-Überzug ein Speiseöl, einen Speiseschellack, Bienenwachs, ein acetyliertes Monoglycerid, ein Salatrim-modifiziertes Fett oder ein Gemisch davon umfasst.

25. Zusammensetzung gemäß Anspruch 24, wobei das Speiseöl Sojabohnenöl, Rapsöl, Baumwollsamenöl, Erdnussöl, Distelöl, Sonnenblumenöl, Maisöl oder ein Gemisch davon ist.

## Revendications

1. Composition comprenant :
(a) un dessert glacé ;
(b) une barrière d'humidité couvrant au moins une surface du dessert glacé ; et
(c) une garniture de matrice vitreuse sucrée placée sur la barrière d'humidité, la garniture de matrice vitreuse comprenant une matrice vitreuse, la matrice vitreuse comprenant du saccharose, un polysaccharide ayant un degré de polymérisation moyen de 2 à 4, ou un mélange de ceux-ci, et la matrice vitreuse comprenant en outre du saccharose cristallin inclus.

2. Composition selon la revendication 1, **caractérisée en ce que** le dessert glacé comprend de la crème anglaise glacée, de la crème glacée, du lait glacé, du gélato, du lait frappé, du yaourt glacé, des entremets au lait, du sorbet laitier, ou du sorbet.

3. Composition selon la revendication 1, **caractérisée en ce que** la barrière d'humidité comprend de la graisse dans une quantité d'au moins 70 pour cent en poids sur la base du poids de la barrière d'humidité, au moins 60 pour cent en poids de la graisse étant liquide lorsqu'elle est conservée à 4°C (40°F).

4. Composition selon la revendication 3, **caractérisée en ce que** la graisse qui est liquide lorsqu'elle est conservée à 4°C (40°F) comprend une huile alimentaire, un triglycéride à chaîne moyenne, ou un mélange de ceux-ci.

5. Composition selon la revendication 4, **caractérisée en ce que** l'huile alimentaire est l'huile de soja, l'huile de coton, l'huile d'arachide, l'huile de tournesol, l'huile de carthame, l'huile de maïs, l'huile de canola, ou un mélange de celles-ci.

6. Composition selon la revendication 3, **caractérisée en ce que** la graisse contient jusqu'à 40 pour cent en poids d'huile de coco, de beurre de cacao, de beurre, d'huile de palme, d'huile de palmiste, d'huiles hydrogénées, ou des mélanges de ceux-ci.

7. Composition selon la revendication 3, **caractérisée en ce que** la graisse comprend
(a) une huile alimentaire, un triglycéride à chaîne moyenne, ou un mélange de ceux-ci, qui est liquide lorsqu'il/elle est conservé(e) à 4°C (40°F) dans une quantité de 82 à 86 pour cent en poids sur la base du poids de la graisse ; et
(b) de l'huile de coco, du beurre de cacao, du beurre, de l'huile de palme, de l'huile de palmiste, de l'huile hydrogénée, ou un mélange de ceux-ci dans une quantité de 14 à 18 pour cent en poids sur la base du poids de la graisse.

8. Composition selon la revendication 7, **caractérisée en ce que** l'huile alimentaire qui est liquide lorsqu'elle est conservée à 4°C (40°F) est l'huile de soja, l'huile de coton, l'huile d'arachide, l'huile de tournesol, l'huile de carthame, l'huile de maïs, l'huile de canola, ou un mélange de celles-ci.

9. Composition selon la revendication 3, **caractérisée en ce que** la barrière d'humidité comprend en outre de la protéine du lait.

10. Composition selon la revendication 3, **caractérisée en ce que** la barrière d'humidité comprend en outre un ou plusieurs disaccharides.

11. Composition selon la revendication 3, **caractérisée en ce que** la barrière d'humidité comprend en outre un arome, une épice, du cacao, de la liqueur d'enrobage de chocolat, du café moulu, un agent émulsifiant, ou un mélange de ceux-ci.

12. Composition selon la revendication 1, **caractérisée en ce que** la barrière d'humidité comprend
(a) de l'enrobage de confiserie dans une quantité de 20 à 60 pour cent en poids sur la base du poids de la barrière d'humidité ; et
(b) de la graisse dans une quantité de 40 à 80 pour cent en poids sur la base du poids de la barrière d'humidité, la graisse étant un liquide à 4°C (40°F) et la graisse étant d'une source autre que l'enrobage de confiserie.

13. Composition selon la revendication 12, **caractérisée en ce que** la barrière d'humidité contient de l'enrobage de confiserie dans une quantité de 25 à 35 pour cent en poids et de la graisse dans une quantité de 65 à 75 pour cent en poids.

14. Composition selon la revendication 12, **caractérisée en ce que** la barrière d'humidité contient de l'enrobage de confiserie dans une quantité de 30 pour cent en poids et de la graisse dans une quantité de 70 pour cent en poids.

15. Composition selon la revendication 12, **caractérisée en ce que** l'enrobage de confiserie comprend de la graisse dans une quantité de 45 à 55 pour cent en poids, de la protéine dans une quantité de 3 à 7 pour cent en poids, du lactose dans une quantité de 5 à 10 pour cent en poids, et du saccharose dans une quantité de 30 à 35 pour cent en poids sur la base du poids de l'enrobage de confiserie.

16. Composition selon la revendication 12, **caractérisée en ce que** l'enrobage de confiserie est un enrobage de chocolat blanc, un enrobage de chocolat noir, un enrobage de chocolat au lait, un enrobage de chocolat au babeurre, un enrobage de chocolat au lait écrémé, ou un mélange de ceux-ci.

17. Composition selon la revendication 12, **caractérisée en ce que** l'enrobage de confiserie est un enrobage de chocolat blanc.

18. Composition selon la revendication 1, **caractérisée en ce que** le polysaccharide est un polydextrose, une inuline partiellement hydrolysée, une gomme guar partiellement hydrolysée, un sirop de maïs ayant un équivalent dextrose de 30 à 50, ou un mélange de ceux-ci.

19. Composition selon la revendication 18, **caractérisée en ce que** la matrice vitreuse comprend du sirop de maïs ayant un équivalent dextrose de 42.

20. Composition selon la revendication 1, **caractérisée en ce que** la matrice vitreuse comprend
(a) du saccharose cristallin inclus dans une quantité de 20 à 60 pour cent en poids sur la base du poids de la matrice vitreuse ; et
(b) une phase vitreuse dans une quantité de 40 à 80 pour cent en poids sur la base du poids de la matrice vitreuse.

21. Composition selon la revendication 20, **caractérisée en ce que** la phase vitreuse comprend du saccharose dans une quantité jusqu'à 20 pour cent en poids sur la base du poids de la matrice vitreuse et du sirop de maïs dans une quantité de 20 à 80 pour cent en poids sur la base du poids de la matrice vitreuse, le sirop de maïs ayant un équivalent dextrose de 42.

22. Composition selon la revendication 1, **caractérisée en ce que** la garniture de matrice vitreuse a une épaisseur de 1 mm à 3 mm.

23. Composition selon la revendication 1, **caractérisée en ce que** la garniture de matrice vitreuse comprend en outre un enrobage de matrice vitreuse couvrant au moins une surface de la matrice vitreuse.

24. Composition selon la revendication 23, **caractérisée en ce que** l'enrobage de matrice vitreuse comprend une huile alimentaire, un shellac comestible, de la cire d'abeille, un monoglycéride acétylé, une graisse modifiée par Salatrim, ou un mélange de ceux-ci.

25. Composition selon la revendication 24, **caractérisée en ce que** l'huile alimentaire est l'huile de soja, l'huile de coton, l'huile d'arachide, l'huile de tournesol, l'huile de carthame, l'huile de maïs, l'huile de canola, ou des mélanges de celles-ci.
